(19) Europäisches Patentamt
European Patent Office
Office européen des brevets

(11) **EP 2 857 885 A1**

(12) **EUROPEAN PATENT APPLICATION**

(43) Date of publication:
08.04.2015 Bulletin 2015/15

(51) Int Cl.:
**G02B 27/01** (2006.01)      **G02B 6/00** (2006.01)
**F21V 8/00** (2006.01)

(21) Application number: 13275235.3

(22) Date of filing: 01.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**Farnborough Aerospace Centre**
**Farnborough**
**Hampshire GU14 6YU (GB)**

(54) **Improvements in and relating to displays**

(57)     A display apparatus (11) for use in displaying an image to a viewer, comprising a transparent optical waveguide display unit (12) arranged for receiving image-bearing light (14) into the optical waveguide display unit, for guiding the received light therealong to an output area (24) thereof, and for outputting from the output area the image-bearing light (15) collimated to present a viewable image. A screen (13) arranged adjacent to and behind the output area of the optical waveguide display unit is visible therethrough and at least partially blocks light from an external scene behind the output area (24) otherwise viewable through the output area. This at least partially blocks the combining of light from the external scene with the viewable image (15).

Figure 2

## Description

FIELD OF THE INVENTION

The invention relates to displays and methods for displaying an image for viewing by a user. In particular, though not exclusively, the invention is suitable for use in a head-up display system or a helmet-mounted display system, but may also be used in a look-down display system e.g. within a cockpit or cabin of an aircraft, or other craft/vehicle.

BACKGROUND

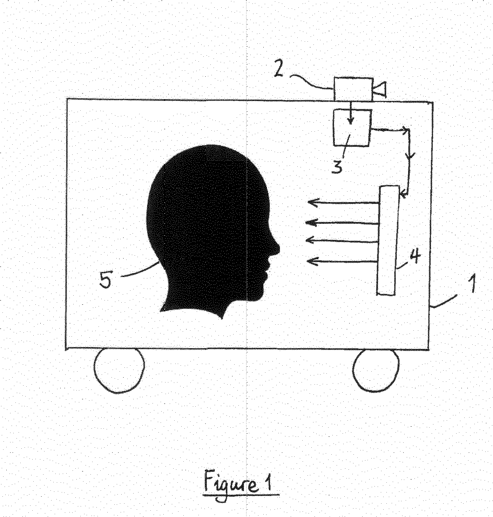

Externally-mounted imaging systems may be used on vehicles such as tactical military vehicles or vehicles used by emergency services to enhance a driver's viewing capabilities when operating in degraded seeing conditions such as darkness, fog, smoke or dust, or when operating in hazardous viewing conditions in which a driver has a restricted view from a protective vehicle. Examples include using an externally-mounted thermal imaging or image intensifying camera in degraded seeing conditions, or a video camera in hazardous conditions. These systems typically consist of a vehicle-mounted imaging camera for capturing live images and an active matrix liquid crystal display (LCD) to present the resulting images to the driver. For example, the camera may be an uncooled passive thermal imaging camera. With this arrangement, the driver may drive the vehicle using the live camera image feed, rather than his/her personal view from vehicle, to guide him/her in controlling the direction and speed of the vehicle. Figure 1 shows an example schematically in which a vehicle 1 has mounted upon its outer surface a camera 2 which produces a live feed of images to an image processor 3 which drives an internally-mounted LCD display screen 4 to display the live images to an occupant 5 (e.g. driver) of the vehicle.

Since the liquid crystal displays used in this set-up obscure the driver's view of the outside world, the driver must then rely entirely on the live camera image feed to control/steer the vehicle.

However, the output of such a LCD display typically presents an image focussed at approximately 300mm to 600mm from the driver. This can result in kinetosis or motion sickness since relative motion between the driver and the LCD display gives a perception of movement which is not duplicated by the driver's vestibular system.

The invention aims to provide an improvement which may be used to address this situation.

SUMMARY OF THE INVENTION

At its most general, the invention is to employ a transparent optical waveguide display unit to generate a viewable image of collimated image-bearing light output by the optical waveguide and to place a rear screen behind the waveguide display area to block background light from an external scene which would otherwise be visible through the waveguide display. In this way, collimated light provides a focus at infinity and so the viewed image will not appear to move as the viewer moves relative to the display, thus kinetosos or travel sickness in the viewer is avoided. The rear blocking screen avoids the displayed image being fully combined with, and confused by, the external scene beyond the transparent waveguide display.

This is important since there is typically a parallax between the view seen through the external camera and the view seen by an occupant (e.g. driver) of the vehicle to which the external camera is attached. The effects of combining the latter with the former would be highly confusing and, thus, the rear blocking screen at least partially suppresses the latter. This counter-intuitive use of a transparent waveguide display unit (i.e. suppressing the consequences of its transparency) has been found to be surprisingly effective.

Transparent waveguide display units, such as would be readily known to the skilled person, have previously been used specifically for their transparency which enables a displayed image to be combined with light from an external view. The external light simply passes through the transparent image display/output area of the waveguide display unit and is combined therewith so that the displayed/output image overlays the external view. The present invention suppresses this effect using the rear blocking screen so that the output image dominates.

This enables the benefits of collimated light output to be enjoyed, while controlling or removing the effects of parallax and other confusing factors mentioned above.

In a first aspect, the invention provides a display apparatus for use in displaying an image to a viewer, comprising: a transparent optical waveguide display unit arranged for receiving image-bearing light into the optical waveguide, for guiding the received light therealong to an output area thereof, and for outputting from the output area the image-bearing light collimated to present a viewable image; a screen arranged in relation to the output area of the optical waveguide display unit so as to be visible therethrough for at least partially blocking light from an external scene behind the output area otherwise viewable through the output area, thereby to at least partially block the combining of light from the external scene with the viewable image. The screen is preferably arranged adjacent to and behind the output area. The screen may be at least partially opaque to visible optical wavelengths of light (e.g. substantially all such wavelengths), and may be substantially totally opaque. The screen may be at least partially reflective to visible optical wavelengths of light (e.g. substantially all such wavelengths), and may be substantially totally reflective. The screen may be so reflective at an outwardly-facing surface thereof opposite to the surface thereof that faces the optical waveguide display unit.

The optical waveguide display unit is preferably a planar waveguide such that the output area thereof is substantially planar. The screen is preferably substantially planar and oriented substantially parallel to the planar waveguide. The optical waveguide display unit is preferably a plate-like waveguide arranged to guide light therealong by total internal reflection between opposing substantially parallel sides of the optical waveguide.

The screen is preferably separated from the output area of the optical waveguide display unit by a spacing such that, desirably, the screen is spaced apart from (e.g. not in contact with) the output area of the optical waveguide display unit. The spacing may be up to about 50mm, preferably the spacing may be up to about 40mm, more preferably the spacing may be up to about 30mm, yet more preferably the spacing may be up to about 20mm, most preferably the spacing is equal to or less than about 10mm. This provides a compact design which is easier to manufacture.

The light-blocking screen may be attached (e.g. detachably attached) to the optical waveguide at one or more places along an edge or edges of the planar waveguide to add strength to the apparatus. The attachment may be dimensioned to maintain the spacing between the waveguide and the screen. The attachment may fully surround the edges of the waveguide to as to enclose the space between the waveguide and the screen thereby to prevent ambient light entering the spacing and scattering from the screen into the output area of the waveguide. The screen may be fixed to, or relative to, the waveguide display unit. The apparatus is preferably fixed to the vehicle, such as within the drivers cabin (pilots cockpit) as shown. The screen may be stowable to a stowed position in which it is not visible through the output area of the optical waveguide. In some embodiments the light-blocking screen may be moveable (e.g. pivotable about a pivot attachment, or slidable or in a pull-down fashion such as to a rolled-out state from a rolled-up state) to and from a stowed position in which it does not cover the rearward-facing surface of the waveguide unit.

The screen may be less than 50% transmissive to light of visible optical wavelengths. The screen may be substantially wholly opaque to light of visible optical wavelengths. The material of the light-blocking screen may comprise any suitably opaque material. The screen may be at least partially opaque to visible optical wavelengths of light (e.g. substantially all such wavelengths), and may be substantially totally opaque (e.g. black). The material of the screen may be a plastics material containing light-absorbing dyes or substances. The screen may be partially opaque such as a neutral density filter or may be tinted to transmit only a suitably low percentage of light of a chosen colour. Partial transmission may be less than 50% transmission over visible optical wavelengths. The screen may be at least partially reflective to visible optical wavelengths of light (e.g. substantially all such wavelengths), and may be substantially totally reflective. The screen may be so reflective at an outwardly-facing surface thereof opposite to the surface thereof that faces the optical waveguide display unit. The surface may comprise reflective optical coatings preferentially highly reflective across the spectrum of visible wavelengths.

The screen may be absorbent to light of visible optical wavelengths.

The screen may be transmissive to infrared light.

The optical waveguide display unit may include an input diffraction grating for receiving image-bearing light and directing the received image-bearing light into the optical waveguide by diffraction, for guiding therealong.

The optical waveguide display unit may include an output diffraction grating for outputting image-bearing light from the optical waveguide. This is preferably at the output area of the display.

The optical waveguide display unit may include an intermediate diffraction grating between the input diffraction grating and the output diffraction grating for receiving image-bearing light from the input diffraction grating and expanding the image-bearing light in a first dimension transverse to the direction of guidance of light towards the output diffraction grating.

The output diffraction grating is preferably arranged for expanding the image-bearing light in a second dimension generally transverse to the first dimension, and to output the result.

The display apparatus may include an image source arranged for providing image-bearing light for input to said optical waveguide.

In a further aspect, the invention may provide a vehicle, aircraft of craft including an image capture apparatus arranged for generating an image(s) of a view external to the vehicle, aircraft or craft, and for generating image-bearing light, and a display apparatus as described above being arranged to receive said image-bearing light for display to an occupant of the vehicle, aircraft of craft.

In a second aspect, the invention provides a method for displaying an image to a viewer, comprising: providing a transparent optical waveguide display unit and receiving image-bearing light into the optical waveguide display unit, guiding the received light therealong to an output area thereof, and outputting from the output area the image-bearing light collimated to present a viewable image; providing an at least partially opaque screen adjacent to and behind the output area of the optical waveguide display unit so as to be visible therethrough and therewith at least partially blocking light from an external scene behind the output area otherwise viewable through the output area, thereby to at least partially block the combining of light from the external scene with said viewable image.

The display apparatus may form a part of a head-up display (HUD).

BRIEF DESCRIPTION OF THE DRAWINGS

Non-limiting examples of the invention will now be described, to better illustrate examples of the invention in preferred embodiments with reference to the accompanying drawings, of which:

> Figure 1 schematically shows a vehicle including an LCD display unit positioned for the viewing of an output image generated by an external camera;

> Figure 2 schematically shows a preferred embodiment of the invention comprising a waveguide display unit positioned for indirect viewing of an output image from an external camera, and a rear light-blocking screen;

> Figure 3 schematically shows a vehicle including a display apparatus of Figure 2;

> Figure 4 schematically shows a slab optical waveguide.

DETAILED DESCRIPTION

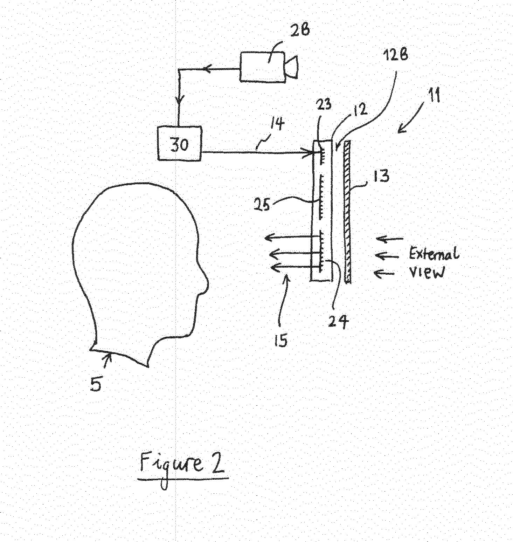

Figure 2 shows a schematic view of a display apparatus according to an embodiment of the present invention.

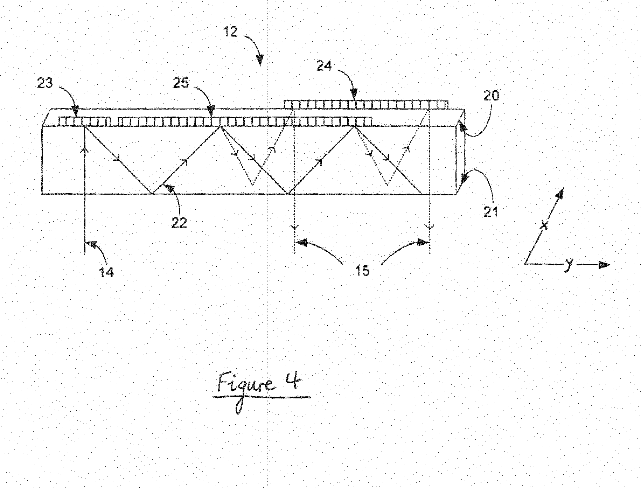

A display apparatus 11 comprising a planar slab waveguide display unit 12 is positioned within a cabin of a vehicle 1 (or other craft). The waveguide display unit 12 is positioned between a rear light-blocking screen 13 and the intended viewing position of a viewer 5 (e.g. pilot or driver). The slab waveguide 12 is described in detail below with reference to Figure 4.

The rear light-blocking screen 13 comprises a light-absorbing screen which is separated from but parallel to the rearward-facing surface of the waveguide display unit 12, this being the planar surface opposite to that from which the image-bearing light 15 is output from the waveguide display unit, in use. The light-blocking screen extends over substantially the whole of the rearward-facing surface of the waveguide display unit 12 although in other embodiments it may extend over at least the rearward-facing surface coincident with the position of the output area of the waveguide display unit (albeit on the opposite side of the waveguide from that output area). In this way, the area of the waveguide display unit from which the output image light is transmitted, and thus the whole area viewed by the viewer 5 in perceiving the image, has positioned behind it the light-blocking screen. This prevents (or suppresses) external light from an external view, otherwise visible (or more visible) to the viewer through the waveguide display unit 12.

The rear light-blocking screen is a flat screen which is parallel to and spaced apart from the planar waveguide display unit (e.g. a spacing about 10mm or less) by a uniform spacing 12B so as not to be in contact with the planar surface of the waveguide. This is because to be in contact with that surface may interfere detrimentally with the ability of the waveguide to totally internally reflect guided image-bearing light at the internal face of that boundary, within the waveguide.

Internal reflection within the waveguide is strongly influenced by the difference in refractive index of the material of the waveguide (e.g. a glass), and the refractive index of whatever is in contact with the waveguide at the external face of that boundary. By holding the light-blocking screen separate from that boundary, total internal reflection is not interfered with.

In some embodiments the light-blocking screen may be attached to the optical waveguide at one or more places along an edge or edges of the planar waveguide to add strength to the apparatus. The attachment may be dimensioned to maintain the spacing between the waveguide and the screen. The attachment may fully surround the edges of the waveguide to as to enclose the space between the waveguide and the screen thereby to prevent ambient light entering the spacing and scattering from the screen into the output area of the waveguide. The screen may be fixed to, or relative to, the waveguide display unit. The apparatus is preferably fixed to the vehicle, such as within the drivers cabin (pilots cockpit) as shown. In some embodiments the light-blocking screen may be moveable (e.g. pivotable about a pivot attachment) to and from a stowed position (not shown) in which it does not cover the rearward-facing surface of the waveguide unit.

The material of the light-blocking screen may comprise any suitably opaque material. The screen may be at least partially opaque to visible optical wavelengths of light (e.g. substantially all such wavelengths), and may be substantially totally opaque (e.g. black). The material of the screen may be a plastics material comprising containing light-absorbing dyes or substances. The screen may be partially opaque such as a neutral density filter or may be tinted to transmit only a suitably low percentage of light of a chosen colour. Partial transmission may be less than 50% transmission over visible optical wavelengths. In this way, the screen may allow some see-through visibility to an external view should the apparatus be needed for other use, or if it is desired to be able to perceive the external view to some small degree if necessary - e.g. should the external camera fail then the display apparatus allows the viewer to see through it (albeit at suppressed light levels) to the external world immediately to allow continued control of the vehicle being driven.

The screen may be at least partially reflective to visible optical wavelengths of light (e.g. substantially all such wavelengths), and may be substantially totally reflective. The screen may be so reflective at an outwardly-facing surface thereof opposite to the surface thereof that faces the optical waveguide display unit. The surface may comprise reflective optical coatings preferentially highly reflective across the spectrum of visible wavelengths.

The light-blocking screen may be transmissive to infra-red wavelengths. This enables the viewer to use the display apparatus for other functions such as night-vision exercises whereby the waveguide display unit may be used to display e.g. radar data or other data not related to the image feed from the external camera, while at the same time a viewer (e.g. driver, pilot) wearing night-vision goggles may see through the optical waveguide display and the rear light-blocking screen to see the external view. This feature extends the functionality of the display apparatus.

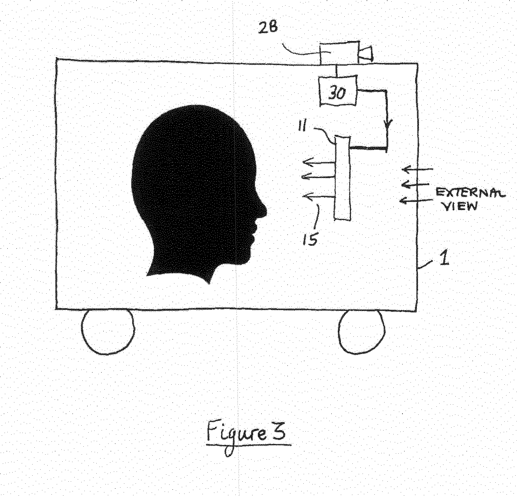

Figure 3 schematically shows a vehicle 1 including a display apparatus of Figure 2. The vehicle 1 has mounted upon its outer surface an infra-red or image intensifying camera 2B which produces a live feed of images to an internally-mounted image generation unit 30 which generates image-bearing light conveying the images from the camera and inputs the image-bearing light into the waveguide display unit 12 of the display apparatus 11 to display the live images to an occupant 5 (e. g. driver) of the vehicle. An image generation unit nay be used such as would be readily apparent and available to the skilled person.

The waveguide display unit is arranged such is shown in detail in Figure 4, which shows a schematic view of the optical waveguide according to an embodiment of the invention.

The planar (e.g. slab) waveguide 12 provides flat opposite surfaces (20, 21) for guiding light rays 22 along the waveguide between the opposing surfaces by successive total internal reflection (TIR) at alternate surfaces internally.

An input diffraction grating 23 is positioned upon a surface of the waveguide to receive an input of light 14 and to diffract the received light in a direction forming an angle of incidence to the opposing surfaces (20, 21) of the waveguide internally which permits TIR. Guiding of the diffracted light rays 22 ensues until the guided light is incident upon an output diffraction grating 24. The output grating diffracts received light in a direction forming an angle of incidence to the waveguide surface 20 of the waveguide internally which does not permit TIR, and the light ray 15 is output from the waveguide for viewing. Image-bearing light is collimated and focussed at infinity.

The waveguide includes an intermediate diffraction grating 25 between the input diffraction grating and the output part for receiving image-bearing light from the input diffraction grating and expanding the image-bearing light in a first dimension generally transverse to the direction of guidance of light towards the output grating. The output diffraction grating is arranged to then expand the image-bearing light from the intermediate grating in a second dimension generally transverse to the first dimension (e.g. in the direction of guidance of light), and to output the result by diffraction.

In this way, a small input pupil of image-bearing light may be expanded in two generally perpendicular directions to produce an expanded exit pupil of image-bearing light for viewing. An example of a suitable such planar waveguide is described in international patent application number PCT/GB2010/000734, published as WO2010/119240A1 on 21 October 2010, entitled "Optical Waveguide and Display Device". Additionally, the display apparatus includes an image source (not shown) arranged for providing an image-bearing light output, preferably collimated, for input to the optical waveguide. Image sources suitable for this purpose are readily available to the skilled person and will not be described here.

In more detail, the orientation of the grooves of the intermediate grating are inclined at an angle of e.g. 60° to the short/width axis (the "x-dimension") of the waveguide.

Image-bearing light incident on the input diffraction grating is diffracted and directed such that the chief ray of the image-bearing light propagates and is incident on the grooves of the intermediate diffraction region at e.g. 30° to the grooves of the grating.

The image-bearing light is partially diffracted and expanded in a first dimension, herein the x-dimension, and turned to propagate through the waveguide to a low efficiency (2% to 20%) output diffraction grating 24 having grating lines/grooves lying in the x-direction. The diffracted rays of image-bearing light are incident substantially normally on this grating and are partially diffracted out of the waveguide, the partial diffraction serves to expand the input pupil in a second dimension, here the long axis (the "y-dimension").

Generally, a diffractive grating or surface can exhibit large amounts of dispersion of incident image bearing light.

This can result in light rays having the same or similar field angles, but which differ in wavelength, being diffracted into different angles into, within or from a waveguide assembly, causing potentially large amounts of chromatic aberration at an output of a display. However, if the dispersion associated with an input grating to a waveguide is substantially matched in an opposing sense with the dispersion associated with an output grating from the waveguide, then the net chromatic dispersion will approach or substantially equal zero.

The correct matching of the diffractive gratings of the waveguide has the effect of mitigating chromatic aberration. In the waveguide assembly of preferred embodiments of the invention, the net chromatic aberration caused by the three diffraction regions shown in Figure 4 may preferably be zero or substantially zero. For example, the input grating 23 and intermediate grating 25 may be matched with the output grating 24 to provide a net chromatic dispersion of substantially zero.

This result is advantageous for a head-up display application that incorporate such a waveguide assembly as it allows the use of a small, cheap and broadband image generating light source in place of a relatively costly, bulky and high powered monochromatic light source, for example a laser, to illuminate the waveguide assembly. Such a result also allows the display apparatus to correctly present multiple colour or full colour display images or information to a viewer.

It can be shown that the output angle $\theta_o$ of light output by the output grating is related to the input angle $\theta_i$, of light input into the input grating, by the equation:

$$\sin(\theta_o) = \lambda\left(\frac{1}{d_i} - \frac{1}{d_o}\right) + \sin(\theta_i)$$

Where $d_i$ and $d_o$ are the periods of the input and output gratings respectively.

Accordingly, if the periods of the gratings are the same, the term above multiplied by A cancels and $\theta_o$ equals $\theta_i$. Thus the grating periods may be matched to avoid chromatic aberration for light sources other than monochromatic sources such as a laser. It will be appreciated that if it is required to match the gratings in this way to avoid chromatic aberration, light should preferably be output from the waveguide generally perpendicularly.

The invention provides a collimated display which is of similar volume to the liquid crystal display but without the kinetosis problems.

The invention has other applications, for example as a look-down display within a driver's cabin or within an aircraft cockpit. The look-down display would provide a collimated output, and hence eliminate the delay required for the pilot to re-focus from the outside world and head up display (focussed at infinity) to the head-down display and instruments within the cockpit.

The look-down display would hence reduce the pilot's workload, providing essential information and allowing the pilots vision to transfer between outside world and the look-down display more rapidly than would be the case with traditional, non-collimated, head-down displays.

The embodiments described above are for illustrative purposes and modifications, variants and all equivalents thereto, such as would be readily apparent to the skilled person, are encompassed within the scope of the invention, such as is defined by the claims for example.

**Claims**

1. A display apparatus for use in displaying an image to a viewer, comprising:

   a transparent optical waveguide display unit arranged for receiving image-bearing light into the optical waveguide display unit, for guiding the received light therealong to an output area thereof, and for outputting from the output area the image-bearing light collimated to present a viewable image;
   a screen arranged in relation to the output area of the optical waveguide display unit so as to be visible therethrough for at least partially blocking light from an external scene behind the output area otherwise viewable through the output area, thereby to at least partially block the combining of light from the external scene with said viewable image.

2. A display apparatus according to any preceding claim in which the optical waveguide display unit comprises a planar waveguide such that the output area thereof is substantially planar, and the screen is substantially planar and oriented substantially parallel to the planar waveguide.

3. A display apparatus according to any preceding claim in which the screen is separated from the output area of the optical waveguide display unit by a spacing such that screen is spaced apart from the output area of the optical waveguide display unit.

4. A display apparatus according to any preceding claim in which the screen is less than 50% transmissive to light of visible optical wavelengths.

5. A display apparatus according to any preceding claim in which the screen is substantially wholly opaque to light of visible optical wavelengths.

6. A display apparatus according to any preceding claim in which the screen is absorbent to light of visible optical wavelengths.

7. A display apparatus according to any preceding claim in which the screen is transmissive to infrared light.

8. A display apparatus according to any proceeding claim in which the screen is stowable to a stowed position in which it is not visible through the output area of the optical waveguide.

9. A display apparatus according to any preceding claim in which the optical waveguide is a plate-like waveguide arranged to guide light therealong by total internal reflection between opposing substantially parallel sides of the optical waveguide.

10. A display apparatus according to any preceding claim in which the waveguide includes an input diffraction grating for receiving image-bearing light and directing the received image-bearing light into the optical waveguide by diffraction, for guiding therealong.

**11.** A display apparatus according to any preceding claim in which the output area includes an output diffraction grating for outputting image-bearing light from the optical waveguide display unit.

**12.** A display apparatus according to claim 11 in which the optical waveguide display unit includes an intermediate diffraction grating between the input diffraction grating and the output area for receiving image-bearing light from the input diffraction grating and expanding the image-bearing light in a first dimension transverse to the direction of guidance of light towards the output area.

**13.** A display apparatus according to claim 12 in which the output diffraction grating is arranged for expanding the image-bearing light in a second dimension generally transverse to the first dimension, and to output the result.

**14.** A vehicle, aircraft of craft including an image capture apparatus arranged for generating an image(s) of a view external to the vehicle, aircraft or craft, and for generating image-bearing light, and a display apparatus according to any preceding claim arranged to receive said image-bearing light for display to an occupant of the vehicle, aircraft of craft.

**15.** A method for displaying an image to a viewer, comprising:

> providing a transparent optical waveguide display unit and receiving image-bearing light into the optical waveguide, guiding the received light therealong to an output area thereof, and outputting from the output area the image-bearing light collimated to present a viewable image;
> providing a screen arranged in relation to the output area of the optical waveguide so as to be visible therethrough and therewith at least partially blocking light from an external scene behind the output area otherwise viewable through the output area, thereby to at least partially block the combining of light from the external scene with said viewable image.

Figure 1

Figure 2

Figure 3

Figure 4

Europäisches
Patentamt

European
Patent Office

Office européen
des brevets

# EUROPEAN SEARCH REPORT

Application Number

EP 13 27 5235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/132914 A1 (WEISS VICTOR [IL] ET AL) 22 June 2006 (2006-06-22)<br>* paragraph [0022] - paragraph [0026] *<br>* paragraph [0162] - paragraph [0167]; figure 8A *<br>* paragraph [0120] - paragraph [0125] * | 1-15 | INV.<br>G02B27/01<br>G02B6/00<br>F21V8/00 |
| X | EP 2 530 510 A2 (SONY CORP [JP]) 5 December 2012 (2012-12-05)<br>* paragraph [0107] - paragraph [0112]; figure 1; example 1 *<br>* paragraph [0130] - paragraph [0132] * | 1-15 | |
| X | US 2008/186604 A1 (AMITAI YAAKOV [IL]) 7 August 2008 (2008-08-07)<br>* paragraph [0052] - paragraph [0054]; claims 1-14; figures 2,9,10 * | 1-15 | |
| X | US 2013/208362 A1 (BOHN DAVID D [US] ET AL) 15 August 2013 (2013-08-15)<br>* paragraph [0030] - paragraph [0033]; figure 3 * | 1-15 | |
| | | | TECHNICAL FIELDS SEARCHED (IPC) |
| A | US 2012/127577 A1 (DESSEROUER FREDERIC [FR]) 24 May 2012 (2012-05-24)<br>* paragraph [0070] - paragraph [0080]; figures 3,4 * | 1-15 | G02B |
| A,D | WO 2010/119240 A1 (BAE SYSTEMS PLC [GB]; VALERA MOHMED SALIM [GB]; SIMMONDS MICHAEL DAVID) 21 October 2010 (2010-10-21)<br>* the whole document * | 1-15 | |

The present search report has been drawn up for all claims

| Place of search | Date of completion of the search | Examiner |
|---|---|---|
| Munich | 14 January 2014 | Muller, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 27 5235

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2014

| Patent document cited in search report | | Publication date | Patent family member(s) | | Publication date |
|---|---|---|---|---|---|
| US 2006132914 | A1 | 22-06-2006 | EP | 1639394 A2 | 29-03-2006 |
| | | | US | 2006132914 A1 | 22-06-2006 |
| | | | WO | 2004109349 A2 | 16-12-2004 |
| EP 2530510 | A2 | 05-12-2012 | CN | 102809821 A | 05-12-2012 |
| | | | EP | 2530510 A2 | 05-12-2012 |
| | | | JP | 2012252091 A | 20-12-2012 |
| | | | US | 2012306940 A1 | 06-12-2012 |
| US 2008186604 | A1 | 07-08-2008 | EP | 1846796 A1 | 24-10-2007 |
| | | | JP | 2008533507 A | 21-08-2008 |
| | | | US | 2008186604 A1 | 07-08-2008 |
| | | | WO | 2006085310 A1 | 17-08-2006 |
| US 2013208362 | A1 | 15-08-2013 | NONE | | |
| US 2012127577 | A1 | 24-05-2012 | EP | 2460037 A1 | 06-06-2012 |
| | | | FR | 2948775 A1 | 04-02-2011 |
| | | | US | 2012127577 A1 | 24-05-2012 |
| | | | WO | 2011012825 A1 | 03-02-2011 |
| WO 2010119240 | A1 | 21-10-2010 | AU | 2010238336 A1 | 03-11-2011 |
| | | | CA | 2758633 A1 | 21-10-2010 |
| | | | EP | 2419780 A1 | 22-02-2012 |
| | | | US | 2012033306 A1 | 09-02-2012 |
| | | | WO | 2010119240 A1 | 21-10-2010 |

EPO FORM P0459

For more details about this annex : see Official Journal of the European Patent Office, No. 12/82

**REFERENCES CITED IN THE DESCRIPTION**

**Patent documents cited in the description**

- GB 2010000734 W

- WO 2010119240 A1